# FASCICULE DE BREVET EUROPEEN

(11) **EP 1 793 102 B1**
(45) Date de publication et mention de la délivrance du brevet: **30.06.2010**
(21) Numéro de dépôt: 06024573.5
(22) Date de dépôt: 28.11.2006
(51) Int. Cl.: F01N 13/18, F16L 55/027, F16J 15/08

(54) **Joint de diffusion**
Diffusionsverbindung
Diffusion sealing

(30) Priorité: 01.12.2005 FR 0553678
(43) Date de publication de la demande: 06.06.2007
(73) Titulaire: Carl Freudenberg KG, 69469 Weinheim (DE)
(72) Inventeur: Ramoino, Paolo, 10036 Settimo T.se (TO) (IT)

(56) Documents cités:
- EP-A- 0 473 306
- EP-A- 0 654 626
- US-A- 3 572 391
- US-B1- 6 647 806

## Description

La présente invention se rapporte à un joint de diffusion, notamment pour la diffusion des flux gazeux circulant dans les tubes d'une ligne d'échappement.

La ligne d'échappement d'un véhicule mis sur le marché joue un rôle dans la performance du moteur, l'amélioration du confort acoustique et la réduction des émissions polluantes. Pour suivre l'évolution des normes internationales, diminuant de plus en plus le seuil autorisé d'émissions polluantes, les nouveaux dispositifs de traitement des gaz d'échappement doivent augmenter leur efficacité. Il existe deux types de dispositifs de traitement desdits gaz :
- les filtres catalytiques, transformant les composants nocifs contenus dans les gaz d'échappement en composant normaux de l'atmosphère,
- et les filtres à particule évitant le rejet des particules polluantes et nocives.

Malgré les derniers progrès de ces nouveaux dispositifs, on a constaté que des composants issus de la combustion des moteurs thermiques et dangereux pour l'environnement parviennent à passer au travers desdits dispositifs de traitement, notamment au fur et à mesure de l'utilisation du véhicule et donc de l'usure du dispositif.

Une première cause du manque d'efficacité desdits dispositifs est la mauvaise répartition des flux des gaz d'échappement sur la surface active du dispositif de traitement. Les gaz d'échappement s'écoulant plus rapidement au centre des tubes, lesdits gaz se concentrent au centre du dispositif et sont inégalement répartis sur la surface active du dispositif de traitement, Cette mauvaise répartition entraîne une usure plus rapide de la surface active du dispositif et par conséquent, l'efficacité du dispositif de traitement des gaz d'échappement baisse progressivement.

Une deuxième raison pour laquelle des composants dangereux pour l'environnement sont rejetés sans être traités ou filtrés, provient du manque d'étanchéité au niveau des raccords entre les différents éléments d'une ligne d'échappement. Une ligne d'échappement subit de grandes variations de température lors de l'utilisation du véhicule, d'où une dilatation des éléments de la ligne d'échappement. Ladite dilatation provoque une déformation des raccords entre les différents éléments de la ligne d'échappement, ce qui altère l'étanchéité desdits raccords.

Un joint de l'art antérieur, décrit dans le brevet n°US-3.572.391, comprend des moyens de diffusion pour répartir les flux de gaz et des moyens d'étanchéité entourant la surface de passage des flux de gaz. Dans le cas d'une ligne d'échappement, les importantes variations de température sont susceptibles d'endommager lesdits moyens d'étanchéité.

Aussi, la présente invention vise à pallier les inconvénients de l'art antérieur en proposant un joint susceptible d'assurer une étanchéité entre différents éléments d'une ligne d'échappement quelles que soient les variations de température, et de diffuser les gaz d'échappement de façon que les flux gazeux soient mieux répartis sur la surface active du dispositif de traitement traversée par lesdits gaz.

A cet effet, l'invention a pour objet un joint composé d'au moins une tôle métallique et susceptible d'assurer l'étanchéité entre des éléments d'une ligne d'échappement des moyens d'étanchéité sous forme d'au moins une déformation entourant une surface de sassage des gaz d'échappement et ladite tôle comprenant des moyens de diffusion des flux gazeux traversant la surface de passage, ledit joint est **caractérisé en ce qu**'il comprend des moyens conducteurs de chaleur situés sur le contour de la surface de passage.

D'autres caractéristiques et avantages ressortiront de la description qui va suivre de l'invention, description donnée à titre d'exemple uniquement, en regard des dessins annexés sur lesquels :
- la figure 1 est une vue de dessus d'un joint illustrant les moyens de diffusion des flux gazeux et l'axe de couple A-A selon lequel sont réalisés les sections des figures suivantes,
- la figure 2C est une section d'un joint selon une variante comprenant des moyens pour évacuer la chaleur.

Dans la suite de la description, on suppose le joint 10 disposé au niveau du raccord entre des éléments 50 d'une ligne d'échappement et on désigne par plaque, une pièce d'épaisseur sensiblement fine relativement à sa longueur et sa largeur, ladite plaque étant en tôle métallique.

Selon une variante de l'invention, le joint 10 peut être une tôle unique qui comprend à la fois les moyens d'étanchéité 12 et les moyens de diffusion 14 des flux gazeux d'échappement.

Pour la suite de la description, le joint 10 est composé d'au moins une première pièce, appelée plaque d'étanchéité 16, comprenant des moyens d'étanchéité 12 permettant d'assurer l'étanchéité au niveau du raccord entre les éléments à étancher et d'au moins une deuxième pièce, appelée plaque de diffusion 18, comprenant les moyens de diffusion 14 permettant de répartir les flux gazeux. On obtient ainsi un joint réalisé selon une conception lamellée préférée car permettant de dédier chacune des deux fonctions du joint à au moins une plaque : au moins une plaque étant dédiée à assurer l'étanchéité du raccord et au moins une autre plaque étant dédiée à la diffusion des flux gazeux.

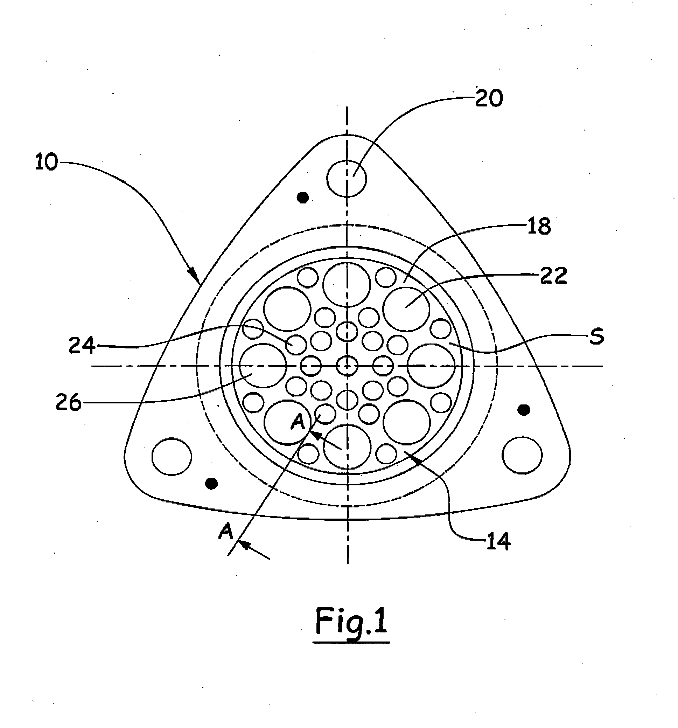

Sur la figure 1, le joint 10 comprend des moyens de fixation 20. Selon un mode de réalisation, lesdits moyens de fixation 20 sont des orifices destinés à recevoir des éléments de fixation, tels que des vis, pour se fixer au niveau de la bride 30 d'un tube 32 par exemple. Ces moyens de fixation 20 et les éléments de fixation associés ne sont pas détaillés ici car ils sont connus de l'homme de l'art. Ces moyens de fixation sont situés sur la plaque d'étanchéité 16 et/ou sur la plaque de diffusion 18.

Pour la suite de la description, on supposera le joint 10 disposé au niveau du raccord d'au moins un tube 32 avec un autre élément de la ligne d'échappement, ledit tube 32 comprenant au niveau du raccord une bride 30 susceptible de recevoir les moyens de fixation 20. D'autre part, on désignera par surface S de passage, la surface maximale traversée par les gaz au niveau de la position du joint, la surface S peut correspondre aussi à la surface maximale à travers laquelle les flux gazeux sont répartis par les moyens de diffusion 14.

Dans une ligne d'échappement, la vitesse des gaz est généralement plus élevée au centre des tubes qu'en périphérie. La solution proposée par cette invention pour mieux répartir les flux gazeux de la ligne d'échappement est de faire varier le gradient de vitesse des flux gazeux entre le centre du tube d'échappement et la périphérie dudit tube. Pour cela, les moyens de diffusion 14 offrent une plus grande densité de zone ouverte en périphérie de la surface S de passage d'une plaque de diffusion 18 qu'au centre de ladite surface S. Ainsi, en ouvrant une zone sensiblement étendue en périphérie de la surface S et en maintenant une zone sensiblement fermée au centre de ladite surface S, on vient freiner le flux gazeux d'échappement au centre de la surface S de passage et accélérer ledit flux en périphérie de ladite surface S,

Les moyens de diffusion 14 situés sur la plaque de diffusion 18 comprennent au moins une ouverture 22 de géométrie et de position variables, réalisée dans ladite plaque de diffusion 18.

Afin d'obtenir une meilleure répartition des flux gazeux d'échappement, la plaque de diffusion 18 est de préférence composée d'un panel de trous 22 de dimensions sensiblement différentes, ainsi des trous de plus petite dimension 24 sont plutôt situés au centre de la surface 5, et des trous de plus grande dimension 26 sont plutôt situés en périphérie de ladite surface S. Le nombre, la position, la forme et les dimensions des trous 22 utilisés pour ces moyens de diffusion 14 peuvent varier sur ladite plaque de diffusion 18 et peuvent évoluer en fonction de la répartition souhaitée.

Selon une variante de l'invention, les moyens de diffusion peuvent être composés de plusieurs plaques de diffusion comprenant chacune des trous de nombre, de position, de forme et de dimensions différents.

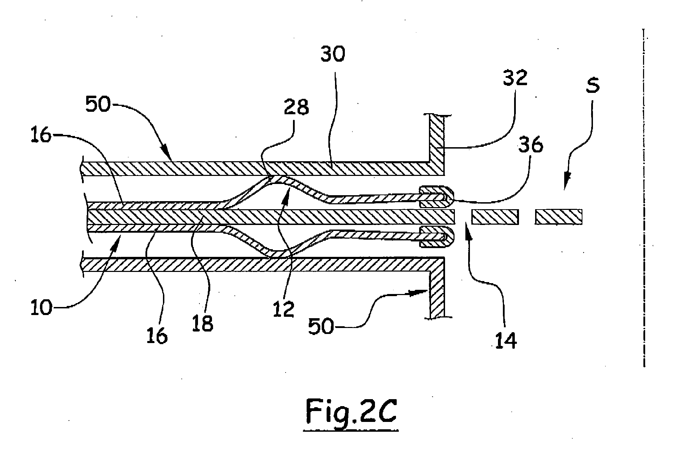

Sur la figure 2C est illustrée une première réalisation des moyens d'étanchéité 12, il s'agit d'au moins une nervure 28 portée par la plaque d'étanchéité 16. Ladite nervure 28 venant en saillie par rapport au reste du joint 10, lors du serrage du raccord équipé dudit joint 10, la bride 30 et la plaque de diffusion 18 viennent comprimer la nervure 28 de la plaque d'étanchéité 16. Ladite plaque d'étanchéité 16 étant fabriquée dans une épaisseur et un matériau lui conférant une certaine élasticité, la nervure 28 s'aplatit sous l'effort du serrage, et réalise l'étanchéité entre la plaque de diffusion 18 et la bride 30 même lorsque les éléments à étancher se déforment grâce à l'élasticité de la tôle. Pour réaliser l'étanchéité complète, la nervure 28 suit un contour fermé à l'intérieur duquel se trouve la surface 5.

Dans une deuxième réalisation des moyens d'étanchéité 12, la plaque d'étanchéité 16 comprend au moins un bossage ou demi-nervure , ladite plaque d'étanchéité 16 étant fabriquée dans une épaisseur et un matériau lui conférant une certaine élasticité, le bossage ou demi-nervure s'aplatit sous l'effort du serrage, et réalise l'étanchéité entre la plaque de diffusion 18 et la bride 30 du tube 32. Pour réaliser l'étanchéité complète, le bossage ou demi-nervure suit un contour fermé à l'intérieur duquel se trouve la surface S.

Pour assurer une étanchéité entre les différents éléments d'une ligne d'échappement quelque soit l'amplitude ou la fréquence des variations de température, des moyens conducteurs de chaleur peuvent équiper le joint 10. Ces moyens conducteurs 36 transmettent la chaleur accumulée par la plaque de diffusion 18 vers les brides. La dissipation de la chaleur qui s'ensuit évite une trop grande montée en température des éléments d'étanchéité tels que les nervures. Ces moyens conducteurs 36 se situent, pour être efficaces, sur le contour de la surface S, en contact avec la plaque de diffusion 18 et au moins un des éléments à raccorder. Lesdits moyens conducteurs 36 peuvent être disposés sur une plaque de diffusion 18, mais ils sont de préférence fixés sur une plaque d'étanchéité 16. Comme représenté en figure 2*C*, ces moyens conducteurs 36 de chaleur peuvent être réalisés sous forme d'un anneau à section en C entourant la surface S de passage, ladite section en C permettant aux moyens conducteurs 36 de venir sertir le bord de l'ouverture, au moins équivalente à la surface S, réalisée dans la plaque d'étanchéité 16 pour le passage des gaz d'échappement.

Selon une variante, ces moyens conducteurs 36 sont en cuivre, bon conducteur de chaleur. De plus, le cuivre étant malléable, lors du serrage des moyens de fixation 20, les moyens conducteurs 36 peuvent remplir à la fois une fonction d'étanchéité en s'écrasant entre les parois plus ou moins rugueuses des éléments à raccorder et la plaque de diffusion 18, et aussi une fonction de butée permettant de limiter l'écrasement de la nervure 28.

Dans un mode de réalisation et pour la suite de la description, le joint 10 est composé d'une plaque de diffusion 18, comprenant les moyens de diffusion 14, prise en sandwich entre deux plaques d'étanchéité 16 comportant chacune les moyens d'étanchéité 12.

Afin de solidariser les assemblages de plaques composant le joint de diffusion selon les différentes réalisations, des points de soudure viennent relier au moins deux plaques entre elles, lesdites plaques assemblées pouvant être de taille, de forme, et d'épaisseur différentes. Par exemple, selon une variante du mode de réalisation dans lequel la plaque de diffusion 18 est prise en sandwich entre deux plaques d'étanchéité 16, la plaque de diffusion 18 a des dimensions légèrement supérieures à la surface S de passage des gaz mais inférieures aux dimensions des plaques d'étanchéité, la dite plaque de diffusion 18 étant maintenue et centrée entre deux plaques d'étanchéité 16 de dimension supérieure sensiblement égale à celle des brides 30.

Dans un mode de réalisation du joint, les moyens de diffusion peuvent être réalisés sous la forme d'un élément filtrant supporté par la plaque de diffusion, avantageusement, la plaque de diffusion forme l'élément filtrant.

Le joint 10 peut prendre toutes les formes voulues par la géométrie des tubes dans lesquels circulent les gaz à répartir ou, par la forme des raccords à étanchéifier entre les différents éléments.

L'invention concerne tout particulièrement des problèmes relatifs aux lignes d'échappement d'un véhicule, ou tout engin comprenant un moteur thermique susceptible de rejeter des polluants dans l'atmosphère. Mais, l'invention couvre plus globalement tous les systèmes ou dispositifs susceptibles de devoir assurer une meilleure diffusion des flux gazeux et de remplir une fonction d'étanchéité au niveau d'un raccord entre différents éléments.

Bien entendu, l'invention n'est évidemment pas limitée au mode de réalisation représenté et décrit ci-dessus, mais en couvre au contraire toutes les variantes, notamment en ce qui concerne les dimensions, les formes du joint 10 ainsi que les matériaux des différents composants du joint de diffusion 10.

## Revendications

1. Joint composé d'au moins une tôle métallique et susceptible d'assurer l'étanchéité entre des éléments d'une ligne d'échappement, des moyens d'étanchéité (12) sous forme d'au moins une déformation entourant une surface S de passage des gaz d'échappement et ladite tôle comprenant des moyens de diffusion (14) des flux gazeux traversant la surface S de passage, ledit joint est **caractérisé en ce qu'**il comprend des moyens conducteurs (36) de chaleur situés sur le contour de la surface S de passage.

2. Joint selon la revendication 1 **caractérisé en ce que** les moyens conducteurs (36) de chaleur sont en cuivre.

3. Joint selon la revendication 1 ou 2, **caractérisé en ce que** le joint (10) est composé d'au moins une plaque d'étanchéité (16) comportant les moyens d'étanchéité (12) et d'au moins une plaque de diffusion (18) comportant les moyens de diffusion (14).

4. Joint selon la revendication 3, **caractérisé en ce que** lesdits moyens conducteurs (36) de chaleur sont en contact avec la plaque de diffusion (18) et au moins un des éléments à raccorder.

5. Joint selon la revendication 4, **caractérisé en ce que** lesdits moyens conducteurs (36) de chaleur sont disposés sur une plaque d'étanchéité et ont une section en C.

6. Joint selon l'une des revendications 1 à 5, **caractérisé en ce que** les moyens de diffusion (14) assurent une répartition des flux gazeux d'échappement sur la surface S de passage.

7. Joint selon la revendication 6, **caractérisé en ce que** les moyens de diffusion (14) offrent une plus grande densité de zone ouverte en périphérie de la surface S de passage qu'au centre de ladite surface S.

8. Joint selon la revendication 7, **caractérisé en ce que** les moyens de diffusion (14) comprennent au moins un trou de plus petite dimension (24) plutôt situé au centre de la surface S de passage, et au moins un trou de plus grande dimension (26) plutôt situé en périphérie de ladite surface S de passage.

9. Joint selon l'une des revendications 1 à 8, **caractérisé en ce que** les moyens d'étanchéité (12) consistent en au moins une nervure (28) suivant un contour fermé à l'intérieur duquel se trouve la surface S de passage, la déformation élastique de ladite nervure (28) permettant d'assurer l'étanchéité.

10. Joint selon l'une des revendications 1 à 8, **caractérisé en ce que** les moyens d'étanchéité (12) consistent en un bossage suivant un contour fermé à l'intérieur duquel se trouve la surface S de passage, la déformation élastique dudit bossage permettant d'assurer l'étanchéité.

11. Joint selon l'une quelconque des revendications 1 à 10, **caractérisé en ce qu'**il comprend au moins une plaque de diffusion (18) prise en sandwich entre au moins deux plaques d'étanchéité (16).

## Claims

1. Gasket composed of at least one metal sheet and able to provide the sealing between elements of an exhaust pipe, sealing means (12) in the form of at least one deformation surrounding a perforated surface S for the passage of the exhaust gases and the said sheet comprising means for diffusing (14) streams of gas passing through the perforated surface S, the said gasket being **characterized in that** it comprises heat conducting means (36) located on the outer edge of the perforated surface S.

2. Gasket according to Claim 1, **characterized in that** the heat conducting means (36) are made of copper.

3. Gasket according to Claim 1 or 2, **characterized in that** the gasket (10) is composed of at least one sealing plate (16) including the sealing means (12) and at least one diffuser plate (18) including the means for diffusing (14).

4. Gasket according to Claim 3, **characterized in that** the said heat conducting means (36) are in contact with the diffuser plate (18) and at least one of the elements to be joined.

5. Gasket according to Claim 4, **characterized in that** the said heat conducting means (36) are arranged on a sealing plate and have a C-shaped cross section.

6. Gasket according to one of Claims 1 to 5, **characterized in that** the means for diffusing (14) distribute streams of exhaust gases over the perforated surface S.

7. Gasket according to Claim 6, **characterized in that** the means for diffusing (14) have a greater concentration of open areas at the periphery of the perforated surface S than at the centre of the said surface S.

8. Gasket according to Claim 7, **characterized in that** the means for diffusing (14) comprise at least one smaller-size hole (24) preferably located at the centre of the perforated surface S, and at least one larger-size hole (26) preferably located at the periphery of the said perforated surface S.

9. Gasket according to one of Claims 1 to 8, **characterized in that** the sealing means (12) consist of at least one rib (28) following a closed outer edge inside which is located the perforated surface S, the elastic deformation of the said rib (28) providing the sealing.

10. Gasket according to one of Claims 1 to 8, **characterized in that** the sealing means (12) consist of a bulge following a closed outer edge inside which is located the perforated surface S, the elastic deformation of the said bulge providing the sealing.

11. Gasket according to any one of Claims 1 to 10, **characterized in that** it comprises at least one diffuser plate (18) sandwiched between at least two sealing plates (16).

## Patentansprüche

1. Verbindung, die aus mindestens einem Metallblech besteht und die Dichtheit zwischen Elementen einer Auspuffanlage gewährleisten kann, wobei Dichtungseinrichtungen (12) in Form mindestens einer Verformung eine Durchlassfläche S der Abgase umgeben, und das Blech Diffusionseinrichtungen (14) der Gasströme enthält, die die Durchlassfläche S durchqueren, wobei die Verbindung **dadurch gekennzeichnet ist, dass** sie wärmeleitende Einrichtungen (36) enthält, die auf dem Umriss der Durchlassfläche S angeordnet sind.

2. Verbindung nach Anspruch 1, **dadurch gekennzeichnet, dass** die wärmeleitenden Einrichtungen (36) aus Kupfer sind.

3. Verbindung nach Anspruch 1 oder 2, **dadurch gekennzeichnet, dass** die Verbindung (10) aus mindestens einer Dichtungsplatte (16), die die Dichtungseinrichtungen (12) aufweist, und aus mindestens einer Diffusionsplatte (18) besteht, die die Diffusionseinrichtungen (14) aufweist.

4. Verbindung nach Anspruch 3, **dadurch gekennzeichnet, dass** die wärmeleitenden Einrichtungen (36) mit der Diffusionsplatte (18) und mit mindestens einem der zu verbindenden Elemente in Kontakt stehen.

5. Verbindung nach Anspruch 4, **dadurch gekennzeichnet, dass** die wärmeleitenden Einrichtungen (36) auf einer Dichtungsplatte angeordnet sind und einen C-förmigen Querschnitt haben.

6. Verbindung nach einem der Ansprüche 1 bis 5, **dadurch gekennzeichnet, dass** die Diffusionseinrichtungen (14) eine Verteilung der Abgasströme auf der Durchlassfläche S gewährleisten.

7. Verbindung nach Anspruch 6, **dadurch gekennzeichnet, dass** die Diffusionseinrichtungen (14) eine größere Dichte offener Zone am Umfang der Durchlassfläche S als in der Mitte der Fläche S bieten.

8. Verbindung nach Anspruch 7, **dadurch gekennzeichnet, dass** die Diffusionseinrichtungen (14) mindestens ein Loch mit kleinerem Durchmesser (24) enthalten, das eher in der Mitte der Durchlassfläche S angeordnet ist, und mindestens ein Loch mit größerem Durchmesser (26) enthalten, das eher am Umfang der Durchlassfläche S angeordnet ist.

9. Verbindung nach einem der Ansprüche 1 bis 8, **dadurch gekennzeichnet, dass** die Dichtungseinrichtungen (12) aus mindestens einer Rippe (28) bestehen, die einem geschlossenen Umriss folgt, in dessen Innerem sich die Durchlassfläche S befindet, wobei die elastische Verformung der Rippe (28) die Gewährleistung der Dichtheit ermöglicht.

10. Verbindung nach einem der Ansprüche 1 bis 8, **dadurch gekennzeichnet, dass** die Dichtungseinrichtungen (12) aus einer Wölbung bestehen, die einem geschlossenen Umriss folgt, in dessen Innerem sich die Durchlassfläche S befindet, wobei die elastische Verformung der Wölbung die Gewährleistung der Dichtheit ermöglicht.

11. Verbindung nach einem der Ansprüche 1 bis 10, **dadurch gekennzeichnet, dass** sie mindestens eine Diffusionsplatte (18) enthält, die zwischen mindestens zwei Dichtungsplatten (16) eingeklemmt ist.
